# EUROPÄISCHE PATENTANMELDUNG

(11) **EP 0 920 801 A1**
(43) Veröffentlichungstag der Anmeldung: **09.06.1999**
(21) Anmeldenummer: 98121953.8
(22) Anmeldetag: 19.11.1998
(51) Int. Cl.: A01K 5/02

(54) **Fütterungsgerät**

(30) Priorität: 07.12.1997 DE 19754087
(71) Anmelder: Pflanzer, Hans, 75397 Simmozheim (DE)
(72) Erfinder: Pflanzer, Hans, 75397 Simmozheim (DE)

(57) **Zusammenfassung**

Es wird ein Futterautomat für Tiere, insbesondere Tauben, vorgeschlagen, der zu genau vorgegebenen Fütterungszeiten genau vorgegebene Futtermengen abgibt. Hierzu ist am unteren Ende eines Futter-Vorratsbehälters (10) eine Verschlußeinrichtung (22) vorgesehen, welche durch eine Zeitschaltuhr gesteuert wird.

## Beschreibung

Die Erfindung betrifft ein Fütterungsgerät für schüttfähiges Futter gemäß dem Oberbegriff des Anspruches 1.

Bei derartigen Fütterungsgeräten wird das jeweils benötigte Futter durch manuell gesteuerte Betätigung der Verschlußeinrichtung dem Vorratsbehälter entnommen. Dies bedeutet zum einen, daß eine Bedienungsperson jeweils zu den Fütterungszeiten anwesend sein muß, zum anderen, daß die jeweils abgemessene Futtermenge nicht unerheblich schwanken kann, wenn nicht mit hoher Aufmerksamkeit gearbeitet wird.

Für die Haltung mancher Tiere, z.B. Tauben, ist es aber notwendig, daß die Tiere zu exakt gleichen Zeiten exakt gleiche Futtermengen bekommen. So hängt das Füttern junger Tauben durch ihre Eltern stark davon ab, daß die Elterntiere selbst Hunger haben. Sind die Elterntiere überfüttert, leidet der Nachwuchs. Auch im Hinblick auf die Gesundheit der Tiere ist es wünschenswert, daß diese nicht überfüttert werden. Andererseits ist auch die ständige Versorgung mit zu wenig Futter nachteilig.

Durch die vorliegende Erfindung soll daher ein Fütterungsgerät gemäß dem Oberbegriff des Anspruches 1 so weitergebildet werden, daß zu exakt vorgegebenen Zeiten exakt vorgegebene Futtermittelmengen ohne Zutun einer Bedienungsperson abgegeben werden.

Diese Aufgabe ist erfindungsgemäß gelöst durch ein Fütterungsgerät mit den im Anspruch 1 angegebenen Merkmalen.

Vorteilhafte Weiterbildungen der Erfindung sind in Unteransprüchen angegeben.

Ist das Steuerteil der Verschlußeinrichtung gemäß Anspruch 2 ausgebildet, so besteht keine Gefahr, daß sich zwischen dem Verschlußteil und der Auslaßöffnung in der Bodenwand des Vorratsbehälters Futtermittel, welches oft in Form von Granulat vorliegt, verklemmt und so ein vollständiges Schließen der Auslaßöffnung verhindert. Da sich die Steuerscheibe in einer zur Auslaßöffnung parallelen Ebene bewegt, schiebt sie an ihr bei noch nicht vollständigem Verschließen der Auslaßöffnung vorbeifließendes Futtermaterial mit ihrem Rand vor sich her.

Auch ist die zum Bewegen des Verschlußelementes benötigte Kraft klein.

Die Weiterbildung der Erfindung gemäß Anspruch 3 ist im Hinblick darauf vorteilhaft, die verschiedenen Teilbereiche der Auslaßöffnung gleichmäßig zu verschließen. Man hat somit während des Schließvorganges keinen zur Achse der Auslaßöffnung assymmetrischen Futtermittelstrom.

Dabei ist die Weiterbildung der Erfindung gemäß Anspruch 4 insofern vorteilhaft, als das Umströmen des Steuerteiles durch das Futter bei nur teilweise geschlossener Auslaßöffnung erleichtert wird.

Die Weiterbildung der Erfindung gemäß Anspruch 5 ist im Hinblick auf eine besonders präzise Dosierung der Futtermenge von Vorteil.

Die Ausbildung der Verschlußeinrichtung gemäß Anspruch 6 ermöglicht es, den Futtermittelstrom ohne Lagerelemente auszuführen, die dem Futtermittelstrom ausgesetzt wären.

Dabei zeichnet sich die im Anspruch 7 angegebene Variante durch mechanisch besonders einfachen Aufbau aus.

Die Weiterbildungen der Erfindung gemäß Anspruch 8 bzw. 9 sind im Hinblick auf kontinuierliche Einstellbarkeit und präzise Dosierung der abgegebenen Futtermenge von Vorteil.

Ein Fütterungsgerät, wie es im Anspruch 10 angegeben ist, eignet sich besonders gut zur gleichzeitigen Fütterung einer Vielzahl von Tieren, z.B. Tauben, Hunden oder Katzen.

Dabei gewährleistet die Weiterbildung der Erfindung gemäß Anspruch 11, daß die verschiedenen in Umfangsrichtung verteilten Freßstellen gleichmäßig mit Futter versorgt werden.

Gemäß Anspruch 12 ist es möglich, das Fütterungsgerät stets an genau derselben Stelle aufzustellen und gegen von Tieren verursachten Verrutschens zu sichern.

Bei einem Fütterungsgerät gemäß Anspruch 13 ist die gesamte Verschlußeinrichtung nach außen abgedeckt.

Die Weiterbildung der Erfindung gemäß Anspruch 14 dient wieder einem reproduzierbaren exakten Positionieren des Fütterungsgerätes.

Die Ansprüche 15 und 16 geben Alternativen für die Steuerung der Umstellung der Verschlußeinrichtung zwischen Schließstellung und Offenstellung an.

Die Weiterbildungen der Erfindung gemäß den Ansprüchen 17 und 19 dienen dazu, das Vorliegen der vollen Schließstellung bzw. vollen Öffnungsstellung der Verschlußeinrichtung zu detektieren und diese Tatsache in der Zeitsteuereinheit zu berücksichtigen.

Dabei ermöglicht die Weiterbildung der Erfindung gemäß Anspruch 18 eine besonders einfache Ausbildung der elektronischen Zeitsteuerungseinheit.

Bei einem Fütterungsgerät nach Anspruch 19 ist man frei in der Wahl des Materiales der Steuerscheibe und erhält auch eine schärfere Vorgabe der Schaltpunkte und einfache Einstellbarkeit der räumlichen Lage der Schaltpunkte.

Dabei ist es bei einem Fütterungsgerät gemäß Anspruch 20 nicht notwendig, daß sich die in axialer Richtung gesehenen Bahnen der Marken nicht schneiden.

Nachstehend wird die Erfindung anhand von Ausführungsbeispielen unter Bezugnahme auf die Zeichnung näher erläutert. In dieser zeigen:
- Figur 1:: eine auseinandergezogene Darstellung eines Automaten zum Füttern von Tauben;
- Figur 2:: einen axialen Schnitt durch einen Futter-Vorratsbehälter und eine die Futterabgabe steuernde Verschlußeinrichtung an dessen unterem Ende;
- Figur 3:: einen vergrößerten vertikalen Längsschnitt durch das untere Ende des in Figur 1 gezeigten Automaten;
- Figur 4:: eine Aufsicht auf das untere Ende des Futterautomaten;
- Figur 5:: ein Blockschaltbild einer Zeitsteuerung für den in Figur 1 gezeigten Automaten;
- Figur 6:: eine auseinandergezogene Darstellung eines abgewandelten Futterautomaten zum Füttern von Katzen oder Hunden;
- Figur 7:: einen axialen Schnitt durch eine abgewandelte Verschlußeinrichtung für den Vorratsbehälter eines Futterautomaten;
- Figur 8:: eine ähnliche Ansicht wie Figur 3, in welcher ein weiter abgewandelter Futterautomat wiedergegeben ist;
- Figur 9:: eine nochmals abgewandelte Verschlußeinrichtung für den Vorratsbehälter eines Futterautomaten mit einem eine Dosierkammer aufweisenden Verschlußteil;
- Figur 10:: eine weiter abgewandelte Verschlußeinrichtung mit einem axial bewegbaren Steuerteil;
- Figur 11:: eine ähnliche Ansicht einer abgewandelten Verschlußeinrichtung mit einer Dosierschnecke;
- Figur 12:: eine ähnliche Ansicht einer abgewandelten Verschlußeinrichtung mit einem Dosier-Bandförderer;
- Figur 13:: einen longitudinalen Schnitt durch einen Futterautomaten, der ähnlich wie die in den Figuren 1 und 2 gezeigte Futterautomat aufgebaut ist, jedoch zum Füttern von Fischen abgewandelt ist;
- Figur 14:: eine schematische axiale Ansicht einer weiter abgewandelten Verschlußeinrichtung; ud
- Figur 15:: ein Blockschaltbild einer Zeitsteuerung, die zusammen mit der Verschlußeinrichtung gemäß Figur 11 verwendbar ist; und
- Figur 16:: eine ähnliche Ansicht wie Figur 14, bei der eine abgewandelte Stellungsschalteranordnung Verwendung findet.

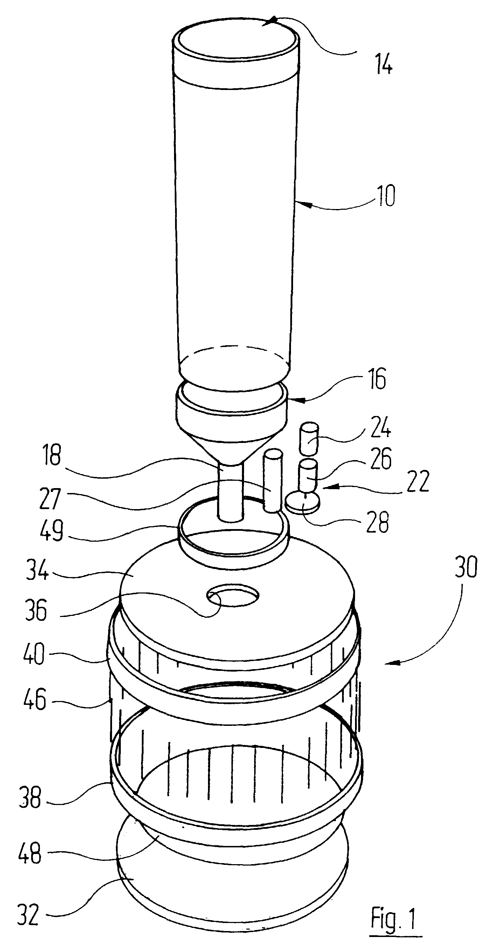

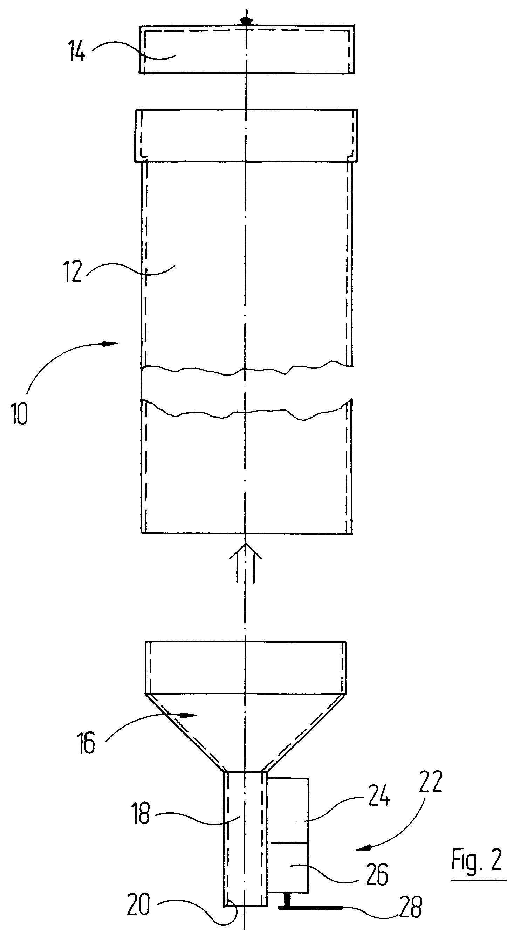

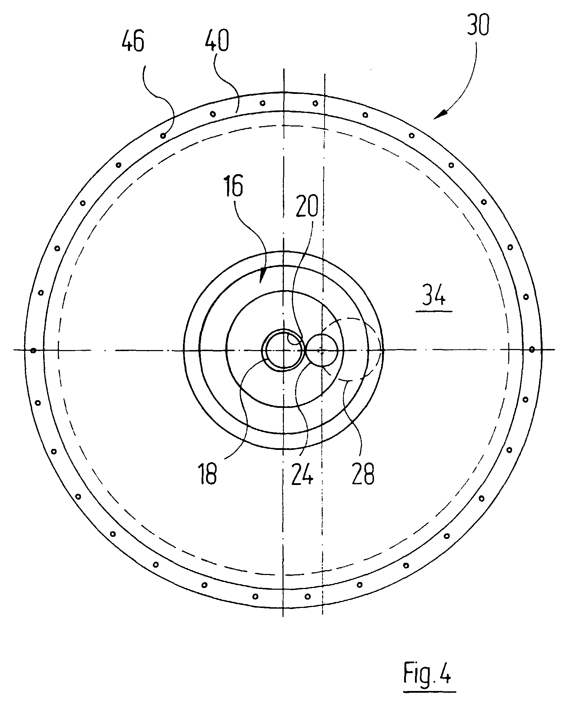

Der in Figur 1 bis 4 gezeigte Futterautomat umfaßt einen im wesentlichen zylindrischen Vorratsbehälter 10 für ein fließfähiges Futtermittel, welches z.B. in Form eines Mehles, in Form von Körnern oder in Form von Granulatmaterial vorliegen kann. Der Vorratsbehälter 10 hat eine zylindrische Umfangswand 12, einen schalenförmigen Deckel 14 sowie ein trichterförmig ausgebildetes Bodenteil 16 mit einem Auslaßstutzen 18.

Der untere Rand des Auslaßstutzens 18 bildet eine Auslaßöffnung 20.

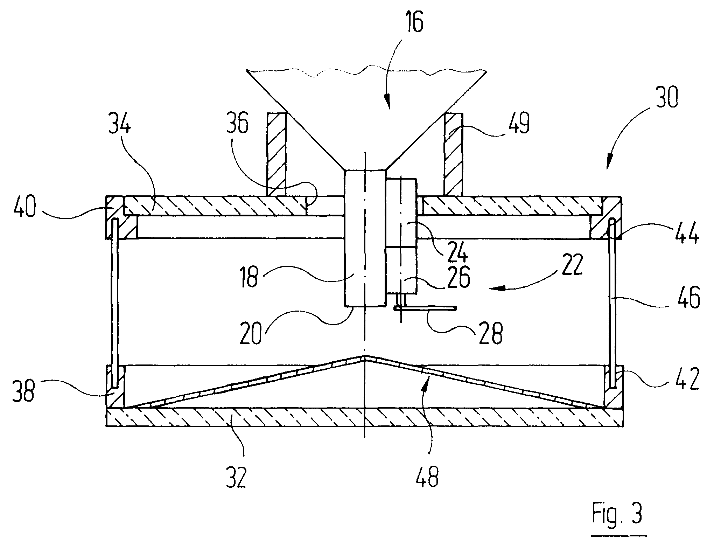

Der Auslaßöffnung 20 ist eine insgesamt mit 22 bezeichnete Verschlußeinrichtung zugeordnet. Diese umfaßt (vgl. insbesondere Figur 3) einen Elektromotor 24 mit nachgeschaltetem Untersetzungsgetriebe 26, welche in einem zylindrischen Gehäuse 27 zusammengehalten sind. Die Ausgangswelle des Untersetzungsgetriebes 26 trägt exzentrisch eine Verschlußscheibe 28, deren Ebene von der unteren Stirnfläche des Auslaßstutzens 18 um eine kleine Strecke versetzt ist, die in der Praxis etwa 1 mm betragen kann.

Wie aus Figur 3 ersichtlich, ist der Abstand zwischen den Achsen von Auslaßöffnung 20 und Untersetzungsgetriebe 26 so auf den Durchmesser und die Exzentrizität der Verschlußscheibe 28 abgestimmt, daß diese zwischen einer in Figur 3 dargestellten Freigabestellung, in welcher die Auslaßöffnung 20 unversperrt ist, und einer Schließstellung verlagerbar ist, in welcher die Verschlußscheibe 28 unter dem genannten geringen Abstand unterhalb der Auslaßöffnung 20 liegt, so daß kein Futtermittel mehr aus dem Auslaßstutzen 18 austreten kann.

Das untere Ende des Bodenteiles 16 ist von einem insgesamt mit 30 bezeichneten Futterentnahmeteil umgeben.

Dieses umfaßt ein durchbrechungsfreies Bodenteil 32, welches senkrecht auf der Achse des Auslaßstutzens 18 steht, ein hierzu paralleles Deckenteil 34, welches mit einer mittigen Öffnung 36 versehen ist, in welcher der Auslaßstutzen 18 und der Elektromotor 24 Aufnahme finden, ein am Bodenteil 32 befestigtes ringförmiges Stabhalteteil 38 sowie ein an dem Deckelteil 34 angebrachtes entsprechendes ringförmiges Stabhalteteil 40. Die Stabhalteteile 38, 40 sind mit fluchtenden Sackbohrungen 42, 44 versehen, in welchen die Enden von in Umfangsrichtung verteilten Stäben 48 Aufnahme finden. Durch diese sind Bodenteil 32 und Deckelteil 34 um eine gewünschte Strecke beabstandet. Die Anzahl der Stäbe 46 gibt vor, wie viele Zutrittsfenster zum Inneren des Futterentnahmeteiles 30 bestehen.

Der Vorratsbehälter 10 sitzt auf einem vom Deckelteil 34 getragenen Zentrierring 49.

Bei einem praktischen Ausführungsbeispiel für einen Futterautomaten für Tauben kann z.B. die Länge der Umfangswand 12 600 mm betragen, ihr Durchmesser 200 mm.

Der Deckel 14 ist im leichten Preßsitz oder engen Gleitsitz auf das obere Ende der Umfangswand 12 aufgeschoben. Das Bodenteil 16 hat einen Außendurchmesser, der dem Innendurchmesser der Umfangswand 12 angepaßt ist, so daß das Bodenteil 16 im Preßsitz in das untere Ende der Umfangswand 12 eingeschoben werden kann.

Der trichterförmige Wandabschnitt des Bodenteiles 16 kann unter 45° radial nach innen abfallen, und der Auslaßstutzen 18 kann eine Länge von 130 mm bei einem Durchmesser von 40 mm aufweisen.

Die Stäbe 46 können einen Durchmesser von 5 mm aufweisen, ihre zwischen den Stirnflächen der Stabhalter 38, 40 liegende Länge kann 120 mm betragen. Der in Umfangsrichtung gemessene Abstand benachbarter Stäbe 46 kann 54 mm betragen. Auf diese Weise ist gewährleistet, daß für jede Taube ein Zutrittsfenster von 120 x 54 mm vorgegeben ist. Innerhalb dieses Fensters kann eine Taube über das Verteilteil 48 nach außen gerutschte Futtermittel erreichen.

Auf dem Bodenteil 32 liegt ein kegelförmiges Verteilteil 48, welches bis an die Innenfläche des ringförmigen Stabhalters 38 reicht und einen Öffnungswinkel von etwa 160 ° hat.

Die Höhe des Stabhalters 38 beträgt in der Praxis für einen Tauben-Futterautomaten etwa 40 mm, so daß der Stabhalter 38 zusammen mit dem Bodenteil 32 bzw. dem Verteilteil 48 eine Futterschale bildet.

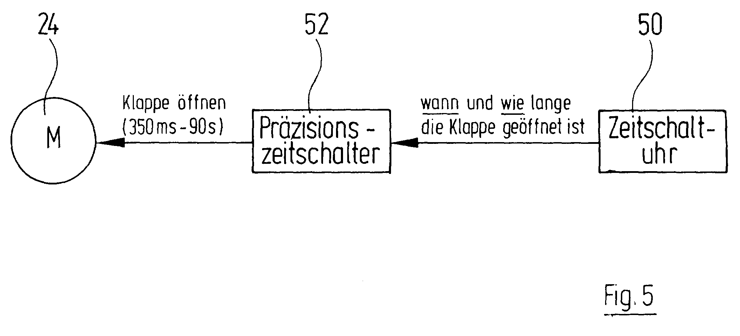

Wie aus Figur 5 ersichtlich, werden die Fütterzeiten durch eine Zeitschaltuhr 50 vorgegeben. Diese arbeitet so, daß sie jeweils vorgibt, wann und wie lange die Verschlußscheibe 28 die Offenstellung einnehmen soll. Zu Beginn der Fütterzeit steuert die Zeitschaltuhr 50 einen einstellbaren Präzisionszeitschalter 52 an, dessen Periode so gewählt ist, daß unter Berücksichtigung der Drehzahl der Ausgangswelle des Untersetzungsgetriebes 26 die Verschlußscheibe 28 gerade um 180 ° bewegt wird.

Damit wird die Verschlußscheibe 28 zu Beginn der Fütterzeit aus der Schließstellung in die Offenstellung bewegt, und der nächste beim Ende der Fütterungszeit von der Zeitschaltuhr 50 auf den Präzisionszeitschalter 52 gegebene Triggerimpuls führt zu einer weiteren Drehung der Verschlußscheibe 28 um 180 ° , so daß diese wieder ihre Schließstellung erreicht.

Damit arbeitet der oben beschriebene Futterautomat insgesamt folgendermaßen:

Jeweils zu Beginn einer eingestellten Fütterungszeit wird die Verschlußscheibe 28 in die in Figur 3 gezeigte Offenstellung bewegt. Unter Schwerkrafteinwirkung strömt fließfähiges Futtermittel aus dem Inneren des Vorratsbehälters 10 durch den Auslaßstutzen 18 nach unten und fällt auf die Spitze des Verteilteiles 48. Dort wird der Futtermittelstrom in Umfangsrichtung gleichmäßig verteilt und rutscht über die Kegelfläche des Verteilteiles 48 gegen die Innenfläche des Stabhalters 38.

Nach Ablauf der vorgegebenen Fütterungszeit ( = Abgabe einer gewünschten Futtermenge) bewegt sich die Verschlußscheibe 28 wieder in die Schließstellung, so daß kein Futter mehr aus dem Inneren des Vorratsbehälters nachströmt. Auf dem Verteilteil 48 liegt nun eine vorgegebene in Umfangsrichtung gleich verteilte Futtermenge, von welcher eine Taube jeweils die zwischen zwei benachbarten Stäben 46 erreichbare Teilmenge fressen kann.

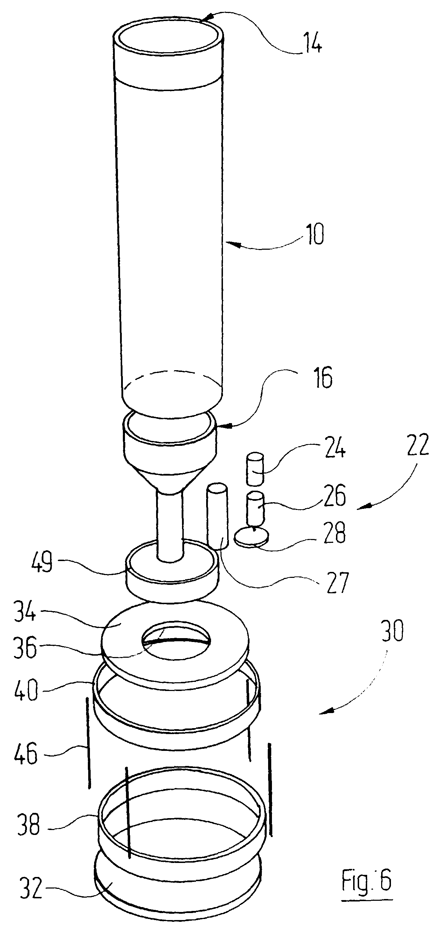

Der in Figur 6 gezeigte Futterautomat entspricht von den Konstruktionsprinzipien her denjenigen nach Figur 1. Entsprechende Komponenten sind wieder mit denselben Bezugszeichen versehen.

Der Hauptunterschied des Futterautomaten nach Figur 6 zu demjenigen nach Figur 1 besteht darin, daß das Futterentnahmeteil 30 insgesamt kleinere radiale Abmessungen aufweist und nur vier in Umfangsrichtung verteilte Stäbe 46 vorgesehen sind. Dieses Gerät eignet sich somit zum Füttern einer kleineren Anzahl von Tieren, z.B. von Katzen oder Hunden.

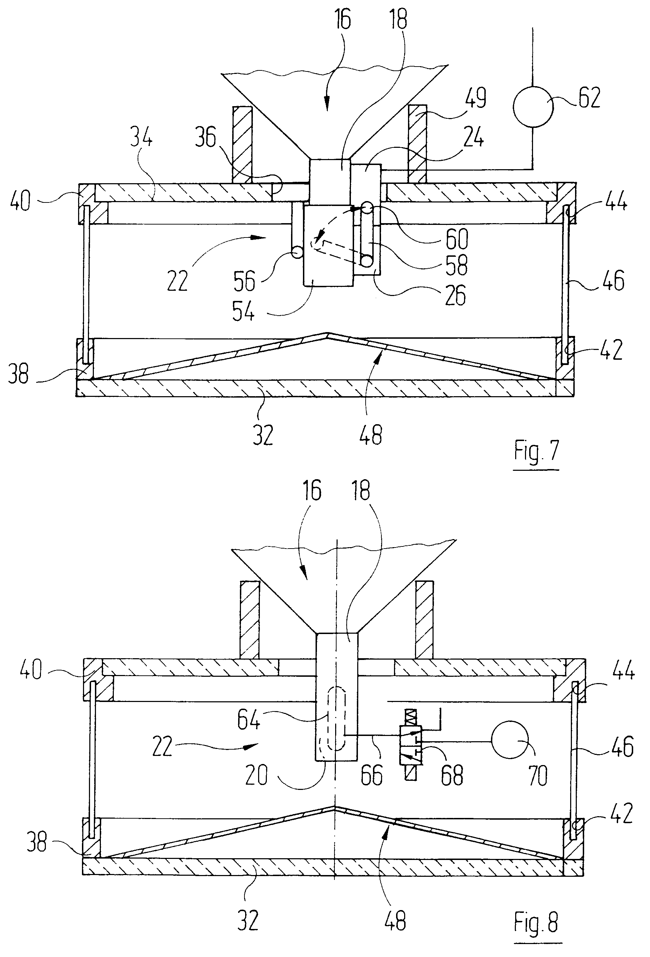

In den in den Figuren 7 bis 12 dargestellten abgewandelten Futterautomaten sind Komponenten, die vorstehend schon beschrieben wurden, wieder mit denselben Bezugszeichen versehen. Diese Futterautomaten unterscheiden sich hauptsächlich bezüglich der Ausbildung ihrer Verschlußeinrichtungen 22.

Die abgewandelte Verschlußeinrichtung 22 nach Figur 7 umfaßt einen elastisch verformbaren Schlauch 54, der auf den nun verkürzten Auslaßstutzen 18 aufgeschoben ist.

Auf der einen Seite des unbelasteten Schlauches 54 ist ein starr von dem Deckelteil 34 getragener Stützstab 56 vorgesehen. Das Untersetzungsgetriebe 26 hat nun eine senkrecht zur Zeichenfläche stehende Ausgangswelle, die über einen Kurbelarm 58 einen um seine Längsachse drehbaren Quetschstab 60 trägt, der parallel zum Stützstab 56 verläuft. Der Quetschstab 60 ist in Figur 7 in einer Stellung wiedergegeben, in welcher er rechts des unbelasteten Schlauches 54 steht.

Erregt man den Elektromotor 24 derart, daß sich der Kurbelarm 58 entgegen dem Uhrzeigersinne dreht, so wird der Quetschstab 60 zunehmend gegen den Stützstab 56 bewegt. Bei dieser Bewegung wird der Schlauch 54 zunehmend plattgedrückt, bis schließlich zwei gegeneinander anliegende Hälften der Schlauchinnenfläche den Schlauch 54 verschließen. Erregt man den Elektromotor 24 im entgegengesetzten Sinne, so federt der Schlauch 54 zunehmend auf, so daß die Auslaßöffnung 20 wieder freigegeben wird.

Das Erreichen der Schließstellung kann man bei diesem Ausführungsbeispiel dadurch erkennen, daß man durch einen Stromfühler 62 den durch den Elektromotor 24 fliessenden Strom überwacht. Ein Stromanstieg zeigt an, daß die Schließstellung des Quetschstabes 60 erreicht ist. Die Öffnungsbewegung des Quetschstabes erfolgt unter reiner Zeitsteuerung, ähnlich wie unter Bezugnahme auf Figur 5 beschrieben.

In Abwandlung des soeben beschriebenen Ausführungsbeispieles kann man den Kurbelarm 58 auch blattfederähnlich ausbilden, um die auf den Schlauch 54 in der Schließstellung einwirkende mechanische Kraft zu begrenzen.

Beim Ausführungsbeispiel nach Figur 8 ist im Inneren des Auslaßstutzens 18 ein aufblasbarer Verschlußkörper aus elastischem Material koaxial aufgehängt. Der Verschlußkörper 64 hat im drucklosen Zustand einen Außendurchmesser, der kleiner ist als der Innendurchmesser des Auslaßstutzens 18, so daß sich eine ringförmige Auslaßöffnung 20 ergibt.

Der Verschlußkörper 64 ist über eine Leitung 66 und ein Magnetventil 68 mit einer Druckluftquelle 70 verbunden.

Durch Bewegen des Magnetventiles 68 in die eine Verbindung mit der Druckluftquelle 70 herstellende Arbeitsstellung wird der Verschlußkörper 64 aufgeblasen und legt sich gegen die Innenfläche des Auslaßstutzens 18, wodurch die Auslaßöffnung 20 verschlossen ist. Die Ansteuerung des Magnetventiles 68 erfolgt wieder auf Zeitbasis, analog wie unter Bezugnahme auf Figur 5 schon beschrieben.

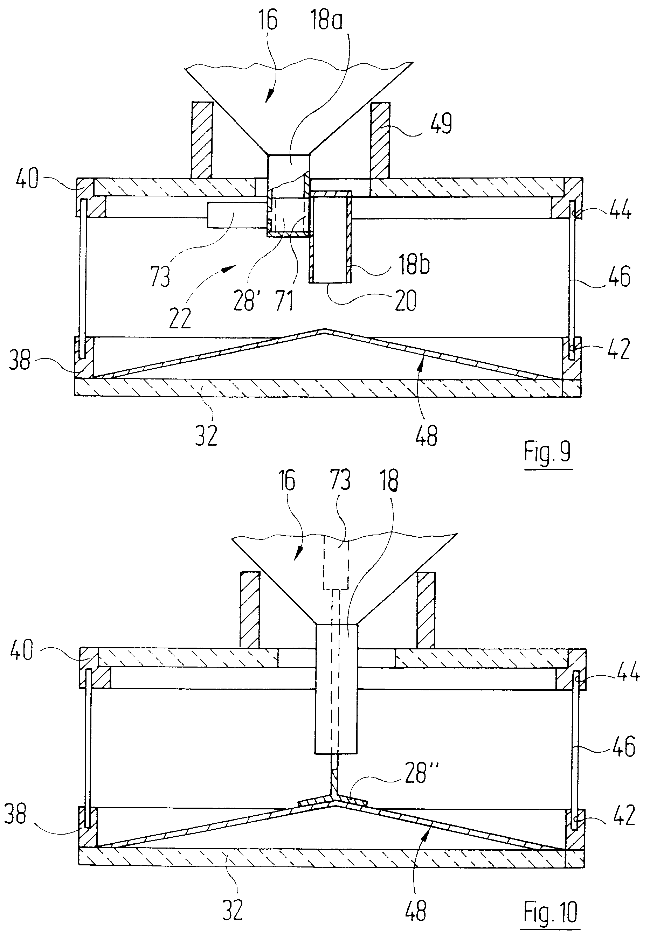

Bei dem Ausführungsbeispiel nach Figur 9 hat der Auslaßstutzen 18 zwei gegeneinander versetzte Abschnitte 18a und 18b. Im Knickbereich ist ein Verschlußschieber 28' vorgesehen, dessen Unterseite auf dem Boden des Auslaßstutzenabschnittes 18a läuft und dessen Oberseite auf der Deckenfläche des unteren Auslaßstutzenabschnittes 18b läuft.

In dem Verschlußschieber 28' ist eine nach oben und unten offene Dosierbohrung 71 vorgesehen. Der Elektromotor 24 verstellt nun den Verschlußschieber 28' derart, daß in einer Endstellung die Dosierbohrung 71 mit der Achse des Auslaßstutzenabschnittes 18a fluchtet und in der anderen Endstellung mit der Achse des Auslaßstutzenabschnittes 18b fluchtet. Der Verschlußschieber 28' wird durch einen Pneumatikzylinder 73 angetrieben. Durch jede Hin- und Herbewegung wird somit die Dosierbohrung 71 einmal mit Futter gefüllt, die entsprechende Futtermenge fällt in der anderen Endstellung des Verschlußschiebers 28' durch den Auslaßstutzenabschnitt 18b nach unten. Durch die Anzahl der Hin- und Herbewegungen des Verschlußschiebers 28' läßt sich die abgegebene Futtermittelmenge steuern. Die Ansteuerung des Pneumatikzylinders 73 kann ähnlich erfolgen, wie für die zwischen zwei winkelmäßigen Endstellungen verlagerbare Verschlußscheibe 28 obenstehend beschrieben.

Beim Ausführungsbeispiel nach Figur 10 ist ein Verschlußkegel 28'' vorgesehen, dessen Öffnungswinkel dem Öffnungswinkel des Verteilteiles 48 entspricht. Der Verschlußkegel 28'' kann durch einen Pneumatikzylinder 73 zwischen einer oberen Endstellung, in welcher seine Oberseite den Auslaßstutzen 18 verschließt, und einer Offenstellung, in welcher er auf der Spitze des Verteilteiles 48 aufliegt, verstellt werden. Die Ansteuerung des Pneumatikzylinders 73 kann ähnlich erfolgen, wie obenstehend für den Verschlußkörper 64 beschrieben.

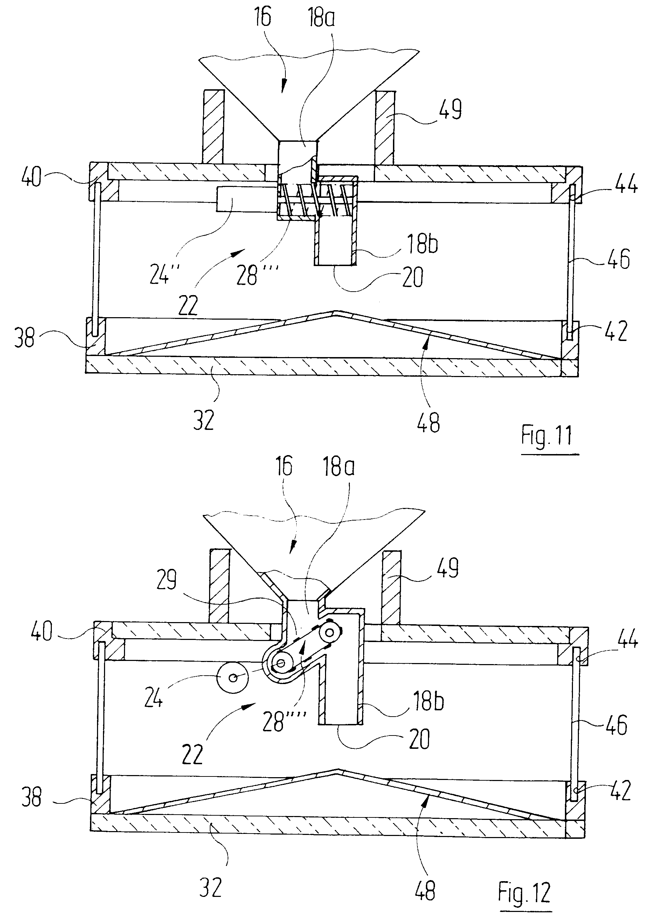

Bei dem Fütterungsgerät nach Figur 11 wird durch den Elektromotor 24 eine Dosierschnecke 28''' angetrieben, welche sich in horizontaler Richtung vom Auslaßstutzenabschnitt 18a in den Auslaßstutzenabschnitt 18b erstreckt. Die Steigung ihrer Wendelrippe ist verglichen mit der Axialabmessung des Durchlasses zwischen den Auslaßstutzenabschnitten 18a und 18b klein, so daß ein 360°-Abschnitt der Wendelrippe den Durchlaß zwischen den beiden Auslaßstutzenabschnitten sperren kann.

Bei dem Fütterungsgerät nach Figur 12 wird durch den Elektromotor 24 ein Dosier-Bandförderer 28'''' angetrieben, welche sich in ansteigender Richtung vom Auslaßstutzenabschnitt 18a in den Auslaßstutzenabschnitt 18b erstreckt. Der Bandförderer 28'''' trägt Mitnahmeleisten 29.

In Abwandlung dieses Ausführungsbeispieles kann man den Bandförderer durch ein Becherwerk (Ketten mit an diesen hängenden Bechern) ersetzen.

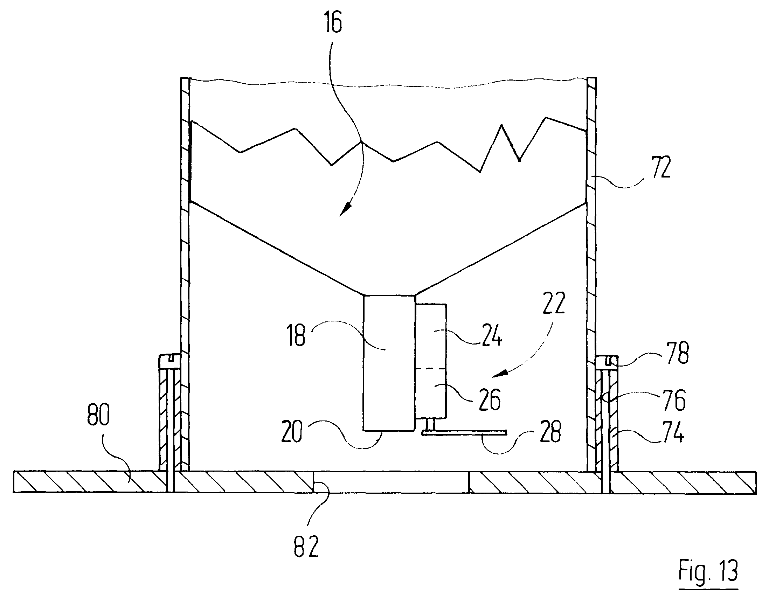

Der in Figur 13 gezeigte Futterautomat ähnelt weitgehend demjenigen nach Figur 1, nur ist das Futterentnahmeteil 30 weggefallen.

Ein den Vorratsbehälter 10 tragendes Außengehäuse 72 ist bis über die Unterseite der Verschlußscheibe 28 hinausgeführt. Das untere Ende der Außengehäuse 72 sitzt in einem Positionierring 74, der mit Durchgangsbohrungen 76 versehen ist. In letzterem finden Schrauben 78 Aufnahme, mittels derer der Positionierring 74 auf der Oberseite eines Steges 80 festgeschraubt ist. Letzterer führt in einen nicht dargestellten See hinein. Der Steg 80 hat mit der Auslaßöffnung 20 fluchtend eine Fütteröffnung 82, deren Durchmesser deutlich größer ist als der Durchmesser der Auslaßöffnung 20, jedoch so klein ist, daß der Fuß eines Menschen nicht hindurchpaßt.

Bei einem praktischen Ausführungsbeispiel für einen derartigen Fisch-Futterautomaten kann die Höhe des Vorratsbehälters 1000 mm, sein Durchmesser 400 mm betragen. Der Abstand zwischen der Unterseite des Auslaßstutzens 18 und dem unteren Ende der Außengehäuse 72 kann 40 mm betragen.

Gemäß Figur 5 kann die Steuerung der Öffnungs- und Schließbewegung der Verschlußscheibe 28 (und der in den Figuren 7 bis 10 gezeigten Steuerteile der Verschlußeinrichtung) auf reiner Zeitbasis unter Verwendung des Präzisionszeitschalters 52 erfolgen.

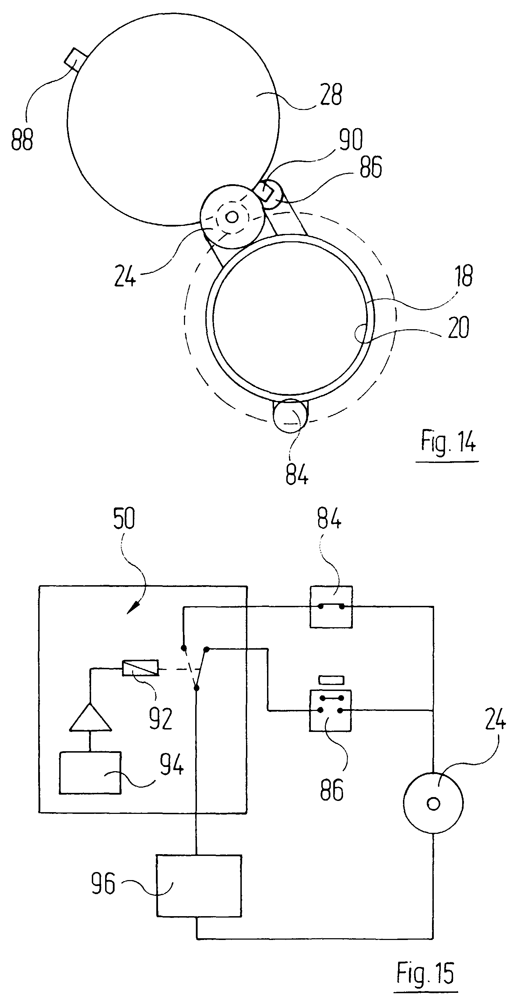

Alternativ kann man gemäß Figur 14 auf dem Auslaßstutzen 18 zwei induktive Näherungsschalter 84, 86 vorsehen, die mit aus Eisen oder einem anderen magnetischen Material hergestellten Betätigungsarmen 88, 90 der Verschlußscheibe 28 zusammenarbeiten. Beide Arme sind am Umfang der aus nicht magnetischem Material gefertigten Verschlußscheibe 28 angeordnet gezeigt, jedoch axial beabstandet (Arm 90 ist stark nach unten gekröpft). Entsprechend sind die Näherungsschalter 84, 86 axial gegeneinander versetzt. Damit steuert der Betätigungsarm 88 nur den Näherungsschalter 84, der Betätigungsarm 90 nur den Näherungsschalter 86. Andere Möglichkeiten sind möglich, um den selben Effekt zu erzielen, z.B. unterschiedlich gefärbte Marken, die mit unterschiedliche Lichtfarbe verwendenden Lichtschranken zusammenarbeiten.

Der Näherungsschalter 84 ist ein normalerweise geschlossener Schalter und so angeordnet, daß er von dem Betätigungsarm 88 dann betätigt wird, wenn die Verschlußscheibe 28 ihre Schließstellung erreicht hat. Der Näherungsschalter 86 ist ein normalerweise geschlossener Schalter und ist so angeordnet, daß er von dem Betätigungsarm 90 betätigt wird, wenn die Verschlußscheibe 28 ihre Offenstellung erreicht hat.

In Figur 15 ist die Verschaltung der Näherungsschalter 84, 86 mit dem Elektromotor 24 einerseits und der schematisch dargestellten Zeitschaltuhr 50 wiedergegeben. Dabei entspricht der dargestellte Schaltzustand der in Figur 12 gezeigten Offenstellung der Verschlußscheibe 28.

Letztere umfaßt ein Relais 92, das durch einen Schaltuhrenbaustein 94 zu vorgegebenen Zeitpunkten erregt bzw. stromfrei geschaltet wird. Der Schaltkontakt des Relais 94 verbindet eine schematisch angedeutete Gleichspannungsquelle 96 wahlweise mit dem Elektromotor 24, wobei in die Verbindungsleitung zwischen der Schließ-Steuerklemme S der Zeitschaltuhr 50 der normalerweise geschlossene Näherungsschalter 86 geschaltet ist und zwischen die Öffnungs-Steuerklemme Ö der Zeitschaltuhr 50 und den Elektromotor 24 der normalerweise geschlossene Näherungsschalter 84 geschaltet ist.

In der normalerweise eingenommenen Schließstellung der Verschlußscheibe 28 steht der Kontakt des Relais 92 in der in Figur 14 gestrichelt dargestellten Arbeitsstellung. Der Näherungsschalter 84 ist geöffnet, da die Verschlußscheibe 28 zum Ende eines vorhergehenden Fütterzyklus ihre volle Schließstellung erreicht hat. Damit erhält der Elektromotor 24 auf dem oberen seiner Versorgungswege keinen Strom, obwohl die Klemme S über den Relaiskontakt mit der Gleichspannungsquelle 96 verbunden ist, und erhält auf dem unteren Versorgungsweg keinen Strom, weil die Klemme Ö nicht mit der Gleichspannungsquelle 96 verbunden ist. Der Näherungsschalter 86 ist geschlossen, da vor ihm kein Betätigungsarm steht.

Wird nun das Relais durch den Zeitschaltuhrenbaustein 94 in die zweite, in Figur 14 ausgezogen eingezeichnete Arbeitsstellung bewegt, so erhält der Elektromotor 24 von der Gleichspannungsquelle 96 her Strom und dreht die Verschlußscheibe 28 aus der Schließstellung heraus. Erreicht die Verschlußscheibe 28 die volle Offenstellung, wird der Näherungsschalter 86 geöffnet und der Motor 24 bleibt stehen.

Beim Herausdrehen der Verschlußscheibe 28 aus ihrer Schließstellung wurde der Näherungsschalter 84 geschlossen. Dies hat aber zunächst keine Auswirkung, da die Klemme S spannungsfrei ist.

In der Offenstellung steht somit der Elektromotor 24 still, da er wiederum auf keinem seiner beiden Versorgungswege Strom erhält.

Zum Ende der Fütterungszeit beendet der Zeitschaltuhrenbaustein 94 das Aktivierungssignal für das Relais 92, wodurch dieses wieder in den in der Zeichnung gestrichelt wiedergegebenen Schaltzustand kommt. Die Klemme S ist nun wieder mit Spannung beaufschlagt, und der Elektromotor 24 erhält wieder Strom. Hierdurch wird die Verschlußscheibe 28 in die Schließstellung bewegt. Bei Erreichen derselben öffnet der Näherungsschalter 86, so daß der Elektromotor 24 angehalten wird. Mit dem Herausdrehen der Verschlußscheibe 28 war der Näherungsschalter 84 wieder geschlossen worden, was aber zunächst keine Auswirkungen hat, da die Klemme "Ö" stromlos ist. Damit bleibt der Elektromotor 24 stehen und verbleibt die Verschlußscheibe 28 in der Schließstellung, bis ein neuer Fütterungszyklus eingeleitet wird.

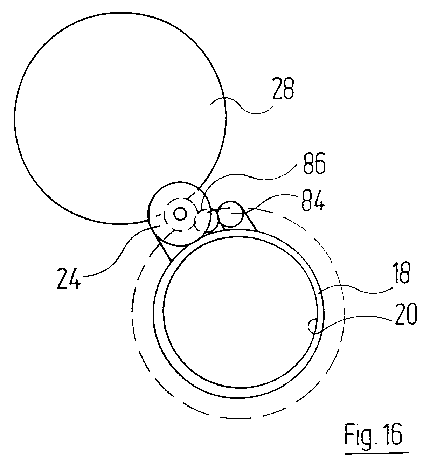

Die gleiche Art der Steuerung erhält man, wenn man den Näherungsschalter 86 als normalerweise geöffneten und bei Gegenüberstellung von magnetischem Material schließenden Schalter wählt und zugleich den Näherungsschalter 84 um 180° versetzt anordnet, wie in Figur 16 dargestellt. Die Näherungsschalter 84, 86 können dann beide direkt durch die nun aus magnetischem Material herstellte Steuerscheibe 28 betätigt werden, wobei man die in Figur 15 gezeigte Schaltung gleichermaßen verwenden kann und entsprechende Schaltzustände innerhalb eines Fütterungszyklusses durchläuft, wie oben unter Bezugnahme auf Figur 14 im einelnen beschrieben.

## Patentansprüche

1. Fütterungsgerät für fließfähiges Futter mit einem Vorratsbehälter (10), der am unteren Ende eine zu einer Auslaßöffnung (20) hin abfallende Bodenwand (16) aufweist, und mit einer der Auslaßöffnung (20) zugeordneten Verschlußeinrichtung (28; 54 bis 60; 64), dadurch gekennzeichnet, daß die Querschnittsfläche der Auslaßöffnung (20) nur einen kleinen Bruchteil der transversalen Querschnittsfläche des Vorratsbehälters (10) beträgt und die Verschlußeinrichtung ein durch einen Motor (24; 73; 64-70) bewegbares oder verformbares Steuerteil (28; 54; 64) sowie eine den Motor (24; 73; 64-70) steuernde Zeitschaltuhr (50) aufweist.

2. Fütterungsgerät nach Anspruch 1, dadurch gekennzeichnet, daß das Steuerteil (28) scheibenförmig ist und in einer zur Achse der Auslaßöffnung (20) senkrechten Ebene bewegbar ist, derart, daß es in einer Schließstellung die Auslaßöffnung überdeckt und in einer Freigabestellung die Auslaßöffnung freigibt.

3. Fütterungsgerät nach Anspruch 1, dadurch gekennzeichnet, daß das Steuerteil (28'') längs der Achse der Auslaßöffnung (20) bewegbar ist, derart, daß es in einer Schließstellung die Auslaßöffnung überdeckt und in einer Offenstellung unterhalb der Auslaßöffnung liegt.

4. Fütterungsgerät nach Anspruch 3, dadurch gekennzeichnet, daß die Oberseite des Steuerungsteiles (28) eine Kegelfläche mit obenliegender Spitze ist.

5. Fütterungsgerät nach Anspruch 1, dadurch gekennzeichnet, daß das Steuerteil (28') durch die Wand eines Auslaßstutzens (18) hindurchbewegbar ist und im Inneren des Auslaßstutzens über eine Stützfläche (49) gleitet und daß das Steuerteil (28') mindestens eine nach oben und unten offene Aufnahme (71) aufweist, wobei diese Aufnahme (71) in einer ersten Stellung des Steuerteiles (28) innerhalb des Auslaßstutzens (18) und in einer zweiten Stellung des Steuerteiles (28') außerhalb des Auslaßstutzens liegt.

6. Fütterungsgerät nach Anspruch 1, dadurch gekennzeichnet, daß das Steuerteil (54; 64) aus einem verformbaren Material besteht und in einer ersten Geometrie einen Durchlaß vom Inneren des Vorratsbehälters (10) zur Umgebung bildet und in einer zweiten Geometrie diesen Durchlaß sperrt.

7. Fütterungsgerät nach Anspruch 6, dadurch gekennzeichnet, daß das Steuerteil (54) einen elastomeren Schlauch (54) aufweist, der durch eine durch den Motor (24) betätigte Schlauchquetsche (56 bis 60) zusammendrückbar ist, oder einen aufblasbaren Verschlußkörper (64) aufweist, der mit einer Druckmittelquelle (70) verbindbar ist.

8. Fütterungsgerät nach Anspruch 1, dadurch gekennzeichnet, daß das Steuerteil (28''') eine durch den Motor (24) angetriebene Förderschnecke aufweist.

9. Fütterungsgerät nach Anspruch 1, dadurch gekennzeichnet, daß das Steuerteil (28'''') einen durch den Motor (24) angetriebenen vorzugsweise mit Mitnahmemitteln (29 versehenen Bandförderer aufweist oder ein durch den motor (24) angetriebenes Becherwerk aufweist.

10. Fütterungsgerät nach einem der Ansprüche 1 bis 9, dadurch gekennzeichnet, daß die Auslaßöffnung (20) von einem Futterentnahmeteil (30) umgeben ist, welches aufweist: ein durchbrechungsfreies Bodenteil (32), ein Deckelteil (34), welches abgesehen von einer Durchtrittsöffnung (36) für das untere Ende des Vorratsbehälters (10) durchbrechungsfrei ist, und eine Mehrzahl längs des Randes von Bodenteil (32) und Deckelteil (34) verteilter Stäbe (46), die parallel zur Achse des Vorratsbehälters (10) ausgerichtet sind.

11. Fütterungsgerät nach einem der Ansprüche 1 bis 10, gekennzeichnet durch ein unter der Auslaßöffnung (20) angeordnetes rotationssymmetrisches Verteilteil (48), welches koaxial zur Achse der Auslaßöffnung (20) ist und zu dieser hin ansteigt, wobei die Oberseite des Verteilteils (48) vorzugsweise eine Kegelfläche bildet.

12. Fütterungsgerät nach Anspruch 10 oder 11, dadurch gekennzeichnet, daß die Oberseite des Deckelteiles (37) einen mit der Außenseite des Vorratsbehälters (10) zusammenarbeitenden Zentrierring (49) aufweist.

13. Fütterungsgerät nach einem der Ansprüche 1 bis 12, dadurch gekennzeichnet, daß ein Außengehäuse (72) des Vorratsbehälters (10) sich bis unter die Auslaßöffnung (20) erstreckt.

14. Fütterungsgerät nach Anspruch 13, gekennzeichnet durch einen mit dem Außengehäuse (72) zusammenarbeitenden Positionierring (74), der mit Aufnahmen (76) für Befestigungsmittel (78) versehen ist.

15. Fütterungsgerät nach einem der Ansprüche 1 bis 14, dadurch gekennzeichnet, daß die Zeitschaltuhr (50) einen Präzisionszeitschalter (52) auslöst, der die Erregung des Motors (24; 73; 64-70) für vorgegebene, vorzugsweise einstellbare Zeitspannen steuert.

16. Fütterungsgerät nach einem der Ansprüche 1 bis 15, dadurch gekennzeichnet, daß die Zeitschaltuhr (50) über Stellungsschalter (84, 86) eine Energiequelle (96) mit dem Motor (24; 73; 64-70) verbindet.

17. Fütterungsgerät nach Anspruch 16, dadurch gekennzeichnet, daß das Steuerteil (28) mit zwei Stellungsschaltern (84, 86) derart zusammenarbeitet, daß in der Offenstellung des Steuerteiles (28) der eine Stellungsgeber (84) und in der Schließstellung des Steuerteiles (28) der andere Stellungsgeber (86) anspricht.

18. Fütterungsgerät nach Anspruch 16 oder 17, dadurch gekennzeichnet, daß die Stellungsschalter (84, 86) unterschiedlich sind, z.B. bezüglich ihrer Betätigung oder bezüglich ihrer Lage.

19. Fütterungsgerät nach Anspruch 18, dadurch gekennzeichnet, daß das Steuerteil (28) mindestens eine Marke (88, 90) aufweist, die mit zu in Bewegungsrichtung derart versetzt angeordneten Stellungsschaltern (84, 86) zusammenarbeiten, daß in der Offenstellung des Steuerteiles (28) der eine Stellungsgeber (84) und in der Schließstellung des Steuerteiles (28) der andere Stellungsgeber (86) anspricht.

20. Fütterungsgerät nach Anspruch 19, dadurch gekennzeichnet, daß das Steuerteil (28) zwei Marken (88, 90) trägt, welche unterschiedlich sind, z.B: bezüglich ihrer Lage und/oder ihres Materiales.
